(19) Europäisches Patentamt
European Patent Office
Office européen des brevets

(11) **EP 4 714 770 A1**

(12) **EUROPEAN PATENT APPLICATION**

(43) Date of publication:
25.03.2026 Bulletin 2026/13

(21) Application number: 25196701.4

(22) Date of filing: **19.08.2025**

(51) International Patent Classification (IPC):
**B60W 40/064** (2012.01)  **B60W 40/068** (2012.01)
**B60W 30/045** (2012.01)  **B60W 40/12** (2012.01)

(52) Cooperative Patent Classification (CPC):
**B60W 40/064; B60W 30/045; B60W 40/068;**
**B60W 40/12;** B60W 2300/14; B60W 2520/10;
B60W 2710/20; B60Y 2200/1422

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **20.09.2024 SE 2450941**

(71) Applicant: **Volvo Truck Corporation**
**405 08 Göteborg (SE)**

(72) Inventors:
• **PARMAR, Rishabh**
**GÖTEBORG (SE)**
• **CHINNI, Bala**
**GÖTEBORG (SE)**
• **GELSO, Esteban**
**VÄSTRA FRÖLUNDA (SE)**
• **SADEGHI KATI, Maliheh**
**ÖJERSJÖ (SE)**
• **JACOBSON, Bengt**
**MÖLNLYCKE (SE)**

(74) Representative: **Ström & Gulliksson AB**
**P.O. Box 4188**
**203 13 Malmö (SE)**

(54) **ESTIMATING LATERAL SLIP LOSSES IN A VEHICLE COMBINATION**

(57) A computer system and computer-implemented method for estimating lateral slip losses in a vehicle performing a manoeuvre are provided. The computer system comprises processing circuitry configured to acquire a lateral slip resistance coefficient for the vehicle, acquire parameters of the manoeuvre to be performed by the vehicle, including a vehicle speed, a vertical force on one or more axles of the vehicle, and a turning radius, and estimate lateral slip losses for the vehicle based on the acquired lateral slip resistance coefficient and the acquired parameters of the manoeuvre.

EP 4 714 770 A1

## Description

### TECHNICAL FIELD

The disclosure relates generally to vehicle motion management. In particular aspects, the disclosure relates to estimating lateral slip losses in a vehicle combination. The disclosure can be applied to heavy-duty vehicles, such as trucks, buses, and construction equipment, among other vehicle types. In particular, the disclosure can be applied in automated multi-unit vehicle combinations.

### BACKGROUND

Vehicle motion management of vehicle combinations is challenging due to the complexity of coordinating multiple vehicle units together. As the vehicle combination is operated to perform different types of manoeuvres, energy management and manoeuvrability are often important objectives. For a vehicle combination being manoeuvred at low speed, for example during a turn, lateral slip losses on the trailers is a particular problem. Further, determining control inputs for a vehicle combination which take these objectives into consideration puts high computational demands on the control systems performing the related calculations.

It is therefore desired to develop a solution for vehicle motion management that addresses or at least mitigates some of these issues.

### SUMMARY

This disclosure provides systems, methods and other approaches for estimating lateral slip losses in a vehicle performing a manoeuvre. The slip losses are estimated based on a lateral slip resistance coefficient (LSRC) and parameters of the manoeuvre to be performed by the vehicle. The slip losses may be communicated to control system, such that these losses can be reduced by controlling the vehicle to perform the manoeuvre while taking the estimated lateral slip losses into account. In this way, the lateral power losses related to a particular manoeuvre can be reduced. By using the LSRC, the complexity of the computations required to determine control inputs is also reduced. This is particularly advantageous in the case of autonomously controlled vehicles.

According to a first aspect of the disclosure, there is provided a computer system for estimating lateral slip losses in a vehicle performing a manoeuvre, the computer system comprising processing circuitry configured to acquire a lateral slip resistance coefficient for the vehicle; acquire parameters of the manoeuvre to be performed by the vehicle, including a vehicle speed, a vertical force on one or more axles of the vehicle, and a turning radius; and estimate lateral slip losses for the vehicle based on the acquired lateral slip resistance coefficient and the acquired parameters of the manoeuvre.

The first aspect of the disclosure may seek to provide a computer system for accurately and efficiently estimating lateral slip losses in a vehicle related to a particular manoeuvre. A technical benefit may include that, by using a lateral slip resistance coefficient to estimate the lateral slip losses, computational demands on the computer system estimating the losses are reduced. The estimated losses may further be used by used by the control system to determine control inputs such that the manoeuvre is performed in the most energy efficient way.

Optionally in some examples, including in at least one preferred example, the processing circuitry is configured to acquire the lateral slip resistance coefficient by modelling a lateral force of the vehicle as a function of turning radius of the manoeuvre. A technical benefit may include that the effect of turning radius on lateral slip losses is taken into consideration when the lateral slip resistance coefficient is acquired. Turning radius is an important parameter in reducing lateral slip losses, with a larger radius and a lower velocity generally being associated with reduced power losses.

Optionally in some examples, including in at least one preferred example, the processing circuitry is configured to acquire the lateral slip resistance coefficient by normalising the modelled lateral force by longitudinal vehicle velocity and vertical force on axles of the vehicle. A technical benefit may include that a relative metric of lateral slip losses is achieved, which removes the impact of speed and vertical force.

Optionally in some examples, including in at least one preferred example the processing circuitry is configured to acquire the lateral slip resistance coefficient as a function of one or more turn parameters. A technical benefit may include that the type of turn, such as turn length and turn angle, is taken into consideration when the lateral slip resistance coefficient is acquired. Type of turn is an important parameter in reducing lateral slip losses. For example, a larger turn angle is generally associated with increased power losses.

Optionally in some examples, the processing circuitry is configured to acquire the lateral slip resistance coefficient as a function of a friction coefficient. A technical benefit may include that the effect of friction on lateral slip losses is taken into consideration, with slip losses generally decreasing as the friction coefficient decreases.

Optionally in some examples, including in at least one preferred example, the processing circuitry is configured to acquire the lateral slip resistance coefficient from a lookup table. A technical benefit may include the lookup table provides an ability to handle the complex relationships between the parameters of the lateral slip resistance coefficient while enabling faster computations and reduced processing load on the computer system.

Optionally in some examples, including in at least one preferred example, the processing circuitry is configured to approximate the lateral slip resistance coefficient as an equation and acquire the lateral slip resistance coefficient by solving the equation. A technical benefit may include that the lateral slip resistance coefficient can be calculated in real-time, which enables accurate and reliable values for the lateral slip resistance coefficient to be acquired even during changing conditions.

Optionally in some examples, including in at least one preferred example, the vehicle is a vehicle combination comprising a tractor unit and at least one trailing unit, wherein the processing circuitry is configured to acquire a respective lateral slip resistance coefficient for each unit of the vehicle combination. A technical benefit may include that accurate estimations of lateral slip losses for vehicle combinations is enabled. In a vehicle combination, each vehicle unit may have a different lateral slip resistance coefficient depending on its configuration on how the vehicle units interact when the vehicle combination is manoeuvred. Therefore, acquiring a respective lateral slip resistance coefficient for each vehicle unit will render reliable estimations of slip losses for vehicle combinations.

Optionally in some examples, including in at least one preferred example, the computer system comprises a control system configured to determine the lateral slip resistance coefficient, and an automated driving system configured to receive the lateral slip resistance coefficient and to estimate the lateral slip losses. A technical benefit may include that the lateral slip resistance coefficient can be pre-calculated by the control system such that the computational demands on the automated driving system during estimation of the lateral slip losses are reduced.

Optionally in some examples, including in at least one preferred example, the automated driving system is configured to determine control inputs for the vehicle based on the estimated lateral slip losses and an objective. A technical benefit may include that a balance between reducing lateral slip losses and achieving further objectives may be provided when the vehicle is controlled by the automated driving system.

Optionally in some examples, including in at least one preferred example, the objective comprises reducing the lateral slip losses and/or reducing swept path width. A technical benefit may include that motion of the vehicle combination may be controlled autonomously with improved energy efficiency and/or manoeuvrability.

According to a second aspect of the disclosure, there is provided a vehicle combination comprising the computer system of any preceding claim. The second aspect of the disclosure may seek to provide a vehicle combination capable of accurately and efficiently estimating lateral slip losses related to a particular manoeuvre. A technical benefit may include that by using a lateral slip resistance coefficient to estimate the lateral slip losses, the computational demands on the vehicle computer system configured to estimating the losses are reduced. The estimated losses may further be used by used to determine control inputs such that the manoeuvre is performed by the vehicle in the most energy efficient way.

According to a third aspect of the disclosure, there is provided a computer-implemented method for estimating lateral slip losses in a vehicle performing a manoeuvre, the method comprising: acquiring, by processing circuitry of a computer system, a lateral slip resistance coefficient for the vehicle; acquiring, by the processing circuitry, parameters of the manoeuvre to be performed by the vehicle, including a vehicle speed, a vertical force on one or more axles of the vehicle, and a turning radius; and estimating, by the processing circuitry, lateral slip losses for the vehicle based on the acquired lateral slip resistance coefficient and the acquired parameters of the manoeuvre.

The third aspect of the disclosure may seek to provide a computer-implemented method for accurately and efficiently estimating lateral slip losses in a vehicle related to a particular manoeuvre. A technical benefit may include that by using a lateral slip resistance coefficient to estimate the lateral slip losses, the computational demands on the computer system performing the method for estimating the losses are reduced. The estimated losses may further be used by used by the control system to determine control inputs such that the manoeuvre is performed in the most energy efficient way.

According to a fourth aspect of the disclosure, there is provided a computer program product comprising program code for performing, when executed by the processing circuitry, the computer-implemented method. The fourth aspect of the disclosure may seek to enable new vehicles and/or legacy vehicles to be conveniently configured, by software installation/update, to accurately and efficiently estimate lateral slip losses related to a particular manoeuvre.

According to a fifth aspect of the disclosure, there is provided a non-transitory computer-readable storage medium comprising instructions, which when executed by the processing circuitry, cause the processing circuitry to perform the computer-implemented method. The fifth aspect of the disclosure may seek to enable new vehicles and/or legacy vehicles to be conveniently configured, by software installation/update, to accurately and efficiently estimate lateral slip losses related to a particular manoeuvre.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognised by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1A schematically shows a side view of a vehicle combination according to an example of the disclosure.
FIG. 1B schematically shows a top view of a vehicle combination according to an example of the disclosure.
FIG. 2 schematically shows, in terms of functional blocks, a control system for a vehicle according to an example of the disclosure.
FIG. 3 is a flow chart of a computer-implemented method according to an example.
FIG. 4 is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

When a vehicle is propelled forward, various types of power losses occur. One type of power loss is slip losses, which can further be categorised into lateral and longitudinal slip losses. The dominant type of slip loss depends on how the vehicle is being manoeuvred. For a vehicle combination being manoeuvred at low speed, for example during a turn, lateral slip losses on the trailers is a particular problem. Lateral slip losses are further dependent on a plurality of parameters, such as the parameters of the turn to be made, vehicle speed and road conditions, whereby the losses are complex to calculate. Estimating and limiting these power losses is therefore important in order to control vehicle combinations more safely and efficiently.

To remedy this, systems and methods are proposed for estimating lateral slip losses in a vehicle performing a manoeuvre. A computer system acquires a lateral slip resistance coefficient (LSRC) and parameters of the manoeuvre to be performed by the vehicle, including a vehicle speed, a vertical force on one or more axles of the vehicle, and a turning radius. Based on this acquired input, lateral slip losses for the vehicle are estimated and communicated to an automated driving system, configured to determine control inputs based on the estimated losses and an objective. In this way, the vehicle can be controlled to perform the manoeuvre with reduced lateral slip losses while achieving an objective, such as reducing swept path width. This is particularly advantageous in the case of autonomously controlled vehicles.

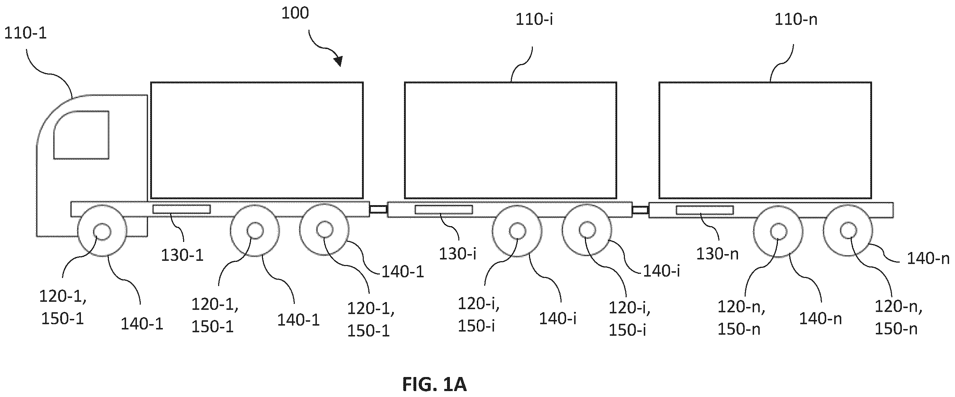

FIG. 1A schematically shows a side view of an example vehicle combination 100 of the type considered in this disclosure. The vehicle combination 100 comprises a number of units 110, including a tractor unit and at least one trailing unit. Each unit 110 may be given an index $i$, and the total number of units 110 in a vehicle combination 100 is designated $n$. Whilst two trailing units are shown, it will be appreciated that the vehicle combination 100 may comprise more or fewer trailing units connected to each other. This gives rise to different types and designations of vehicle combinations.

A tractor unit, such as the tractor unit 110-1, is generally the foremost unit in a vehicle combination 100, and may comprise the cabin for the driver, including steering controls, dashboard displays and the like. Generally, the tractor unit 110-1 is used to provide propulsion power for the vehicle combination 100. In the example of FIG. 1A, the tractor unit 110-1 may also be used to store goods that are being transported by the vehicle combination 100.

A trailing unit, such as the trailing units 110-i, 110-n, is generally used to store goods that are being transported by the vehicle combination 100. A trailing unit may be a truck, trailer, dolly and the like. A trailing unit may also provide propulsion to the vehicle combination 100. A trailing unit without a front axle, such as the trailing units 110-i, 110-n, is known as a semitrailer. In vehicle combinations such as that shown in FIG. 1A, vehicle motion management is available on a unit level to receive requests from a manual or virtual driver to coordinate the propulsion, braking and steering.

Whilst three tractor axles and two axles per trailer are shown, it will be appreciated that any suitable number of axles may be provided on the respective units 110. It will also be appreciated that any number of the tractor axles and/or trailer axles may be driven axles, including zero (i.e. one of the units may include at least one driven axle while the other does not).

The axles of the vehicle units can be either steered or non-steered. The front axle of the tractor unit 110-1 is typically steered, allowing the driver to control the direction of the entire combination, while its rear axles are generally non-steered and provide traction. Axles of the trailing units 110-i, 110-n may be steered or non-steered. Non-steered axles follow the path of the tractor unit 110-1, and while they are simple and durable, it increases the risk of tyre scrubbing during sharp turns, whereby tyre wear is increased and a larger turning radius required. In contrast, steered axles improve manoeuvrability by allowing the trailer wheels to turn, thereby allowing the trailing units 110-i, 110-n to follow the tractor unit 110-1 more closely.

The steered axles may be either passively or actively steered. During passive steering, the wheels automatically adjust based on the forces that occur during manoeuvring of the vehicle. During active steering, the steering angles of the axles is actively controlled by electronic or hydraulic systems. Active steering enables the manoeuvrability of a vehicle combination to be improved, especially when navigating tight corners or narrow spaces. In multi-unit vehicle combinations, active steering may optimise the alignment of the trailer axles, allowing the trailer to turn more effectively, while reducing tyre wear and lateral forces.

The vehicle combination **100** may comprise one or more sources of propulsion. For example, on or more of the units **110** may comprise one or more electrical machines **120** such as electric motors. Each unit **110** may comprise one or more batteries **130** configured to provide power to the electrical machines **120**. A vehicle combination **100** that uses only battery power is a BEV. In some examples, for example in the case of an HEV, a unit **110,** most often a tractor unit 110-1, may also include another source of propulsion, for example an internal combustion engine (ICE). The vehicle combination **100** also comprises a drivetrain (not shown) to deliver mechanical power from the propulsion source (the electrical machines **120** or the ICE) to the wheels **140**. All units **110** may provide propulsion to the vehicle combination **100**. In the examples discussed herein, the vehicle combination **100** may be a BEV or an HEV.

The electrical machines **120** are configured to drive, e.g. provide torque and/or steering to, one or more axles or individual wheels **140** of the unit **110**. The electrical machines **120** of a unit **110** can supply either a positive (propulsion) or negative (braking) force. Furthermore, each unit **110** may comprise one or more sets of service brakes **150**. The ICE, electrical machines **120** and service brakes **150** are considered as actuators of the vehicle combination **100**. Other actuators may also be present. For example, steering actuators **150,** such as steering servo arrangements, may be provided, and may be implemented as electro-hydraulic actuators. Each actuator in a given unit **110** may be given an index k, and the total number of actuators in a given unit **110** is designated m. It will be appreciated that each axle and/or wheel **140** may have an associated electrical machine **130,** set of service brakes **150,** and/or set of steering actuators **150**.

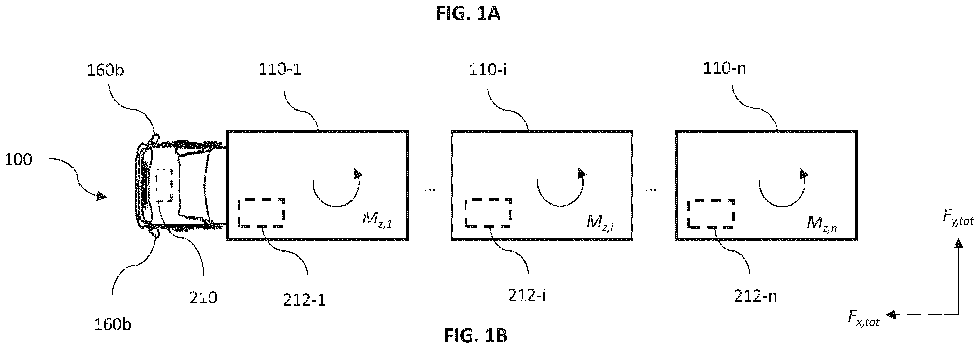

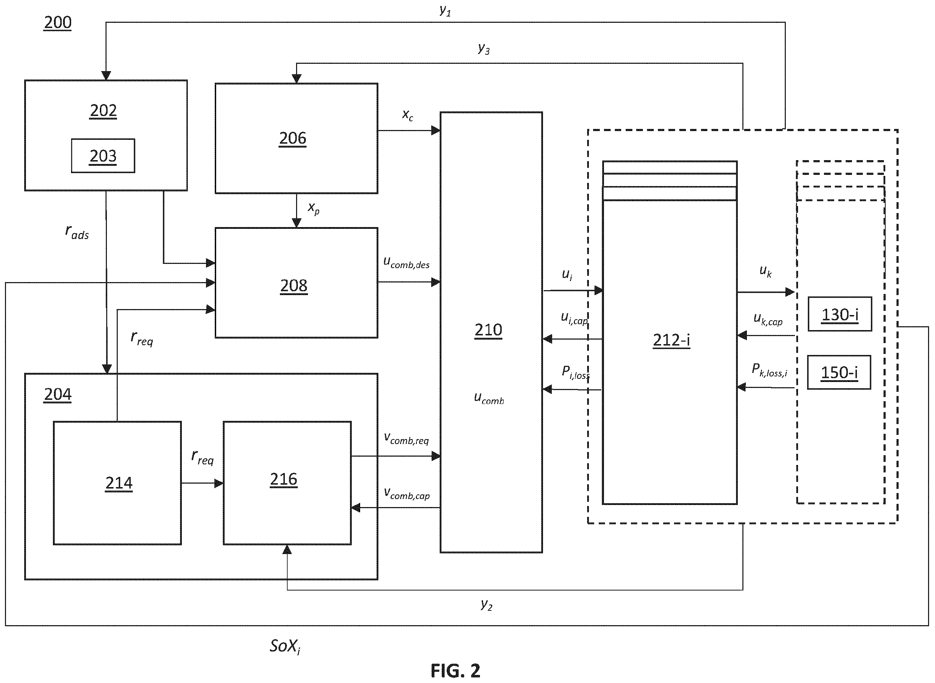

**FIG. 1B** schematically shows a top view of an example vehicle combination **100** of the type considered in this disclosure. Similarly to the example of **FIG. 1A,** the vehicle combination **100** comprises a number of units **110,** including a tractor unit and a plurality of trailing units. **FIG. 1B** also shows the requested global forces of the vehicle combination **100** as a whole. Examples of requested global forces of the vehicle combination **100** as a whole may e.g. include a total longitudinal/axial force $F_{x,tot}$ a total lateral/radial force $F_{y,tot}$, and/or one or more yaw moments $M_{z,i}$ for the respective vehicle units **110**. In order to control motion of a vehicle combination **100,** the requested global forces of the vehicle combination **100** must be determined and resolved. This may be achieved by a control system **200** (shown in **FIG. 2**) of the vehicle combination **100** that determines control signals based on a requested reference input and certain operating conditions of the vehicle combination **100**.

In the example of **FIG. 1B,** the vehicle combination **100** includes a combination control allocator **210** and a plurality of unit control allocators **212**. The combination control allocator **210** and the various unit specific control allocators **212** together form a distributed control allocation system for the vehicle combination **100**. In this system, the control allocation may be performed on multiple levels, i.e. first on a level of the vehicle combination **100** as a whole, and then on a level of each vehicle unit **110** individually. The combination control allocator **210** may be provided (as shown) as part of the tractor unit **110-1,** while the unit control allocators **212** are provided as part of each individual unit **110**. It will be appreciated that the combination control allocator **210** may be provided as part of any unit **110** of the vehicle combination **100**.

**FIG. 2** schematically shows, in terms of functional blocks, an example control system **200** for a vehicle, such as the vehicle combination **100**. The control system **200** serves to perform various functions of the vehicle combination **100,** such as power management and motion coordination. The control system **200** comprises a tactical layer **202,** a target generator **204,** a state estimator **206,** an energy manager **208,** a combination control allocator **210** and a plurality of unit control allocators **212**. The combination of the target generator **204,** the state estimator **206,** and the energy manager **208,** may be referred to as a vehicle motion controller (VMC) of the vehicle combination **100**.

The tactical layer **202** is responsible for ensuring that the trajectory for the whole combination **100** is obstacle free and collision free. The tactical layer **202** may also be referred to as an automated driving system (ADS) of the vehicle combination **100**. For example, the tactical layer **202** may determine a trajectory for the vehicle combination **100** that ensures that a swept path of the vehicle combination **100** and the individual units **110** is safe and achievable. Swept path refers to the total area or space that a vehicle occupies on the ground while making a turn. It accounts for the difference between the path taken by the front and rear wheels, especially in articulated vehicles like vehicle combinations. In such vehicles, the rear wheels, if not steered, do not precisely follow the paths traced by the front wheels, resulting in a measurable degree of inward deviation known as off-tracking. Moreover, even if axles are steered such that all wheels align their tracks, the vehicle's footprint during the turn exceeds its width, as parts of the vehicle will extend inward beyond the paths of the wheels. Swept math width is the maximum width of the swept path between outermost and innermost points of the vehicle combination in a turn or curve and it is a critical parameter for improving the manoeuvrability of vehicle combinations.

To this end, the tactical layer **202** may provide an input $r_{ads}$ relating to a manoeuvre in an autonomous driving case. The input $r_{ads}$ may include requests such as target distance, velocity, acceleration, and curvature (steering) for the vehicle combination **100**. These may be scalar values or vectors with evolutions for a given prediction horizon. The trajectory may be determined by the tactical layer **202** based on hard constraints for the vehicle combination **100,** as will be discussed below. The tactical layer **202** may also send determined future performance limits for the vehicle combination **100.**

The tactical layer **202** may also send requests for power and energy management to optimise range and mission performance. For example, the tactical layer **202** may also include predictive energy management, including battery targets, capabilities and statuses that determine how the energy sources of the vehicle combination **100** should be used for a whole mission.

In some examples, the tactical layer **202** comprises a vehicle model **203**. The vehicle model **203** is a model of the vehicle combination **100** intended to plan trajectories of the vehicle combination **100**. As such, the vehicle model **203** can be used to determine the input $r_{ads}$. The vehicle model **203** may include different parameters of the vehicle combination **100** such as capabilities, structural parameters, and dynamic parameters of the vehicle combination **100,** and be capable of determining the forces acting on the vehicle combination **100**. The vehicle model **203** can be any suitable model, for example a model known in the art. The vehicle model **203** can be based on real tests, computer model simulations, a machine-learning model, or other suitable means known in the art. The vehicle model **203** may be, for example, a single-track model (i.e., left and right wheels on a given axle are considered together), such as a bicycle model. The vehicle model **203** may alternatively be a more complex model such as a dual track model (i.e., left and right wheels on a given axle are considered separately). The real units can have axle groups with several axles, but in the model they may be considered together. A tyre model can be used in combination with the vehicle model **203**. The tyre model may take into account the cornering stiffness of the tyres of the vehicle combination **100**. The vehicle model **203** may be configured to operate within an agreed operational design domain (ODD) and a specified safe operating envelope (SOE) for the vehicle combination **100**. The vehicle model **203** may therefore include vehicle motion management logic that includes capabilities of the vehicle combination **100** and the SOE to avoid instabilities such as rollover, jack-knife, and/or an unsafe swept path width.

The vehicle model **203** may be time-invariant or time variant, based on certain parameters of the vehicle combination **100**. To this end, the tactical layer **202** may receive parameters $y_1$ of the vehicle combination **100** from the vehicle combination **100** and/or the individual units **110**. The parameters $y_1$ may include capabilities, structural parameters, and/or dynamic parameters of the vehicle combination **100**.

The vehicle capabilities comprise at least one of a maximum range capability, a maximum operational time capability, a longitudinal acceleration minimum, a longitudinal acceleration maximum, a longitudinal acceleration rate minimum, a longitudinal acceleration rate maximum, a longitudinal velocity minimum, a longitudinal velocity maximum, a longitudinal distance minimum, a longitudinal distance maximum, a yaw rate minimum, a yaw rate maximum, a yaw acceleration minimum, a yaw acceleration maximum, a longitudinal velocity maximum for uphill slopes, and a longitudinal velocity maximum values for downhill slopes. While the maximum range capability relates to total distance that the vehicle can travel, the longitudinal distance minimum/maximum refers to a relatively short distance, for example for shunting in a logistic context for moving a vehicle in a yard, or for a safe stop. In some examples, the capabilities are functions of capability parameters.

The structural parameters of the vehicle combination **100** comprise at least one of a type of the vehicle combination **100,** a number of units **110** of the vehicle combination **100,** a number of axles in each unit **110,** a tyre type in each axle group, a distance of each axle of each unit **110** to the first axle and coupling points of the unit **110,** the number of steered axles in each unit **110,** the number of propelled axles in each unit **110,** the number of liftable axles in each unit **110,** nominal diameters of the wheels **140,** a track of each axle, a mass of the unladen vehicle combination **100,** and a centre of gravity of the unladen vehicle combination **100**. The type of the vehicle combination **100** may be defined by different types of coupling used in the vehicle combination **100**. The tyre type may be defined by a tyre stiffnesses, a peak friction/ slip parameter of the tyre, and/or other parameters used in known tyre models such as the Pacejka Magic Formula or a brush model.

The dynamic parameters of the vehicle combination **100** comprise at least one of a mass of each unit **110,** a load on each axle, an inertia of each unit **110,** a lumped cornering stiffness of each axle, a rolling resistance of each axle, a distance of a dynamic centre of gravity from the first axle of each unit **110,** and an air drag property. The inertia may be expressed in three directions, although the vertical direction is most relevant for trajectory planning as it represents the yaw moment of inertia, which is relevant for the yaw-plane motion of the vehicle combination **100**. The air drag property may include am effective surface of the vehicle combination **100** for different wind directions.

Based on these received parameters $y_1$ of the vehicle combination **100,** the vehicle model **203** can be updated to reflect the current state of the vehicle combination **100**. This can be advantageous in autonomous driving of multi-unit vehicle combinations, as it may enable safe and precise trajectory planning, which is not trivial due to the complexity in their dynamics and interactions between units **110**. For instance, an updated vehicle model **203** can enable a swept path of both the vehicle combination **100** and individual units **110** to be maintained within a safe range. Additionally, the vehicle model **203** can be applied to assess rough timing, determining how long the vehicle combination **100** can be used.

The tactical layer **202** can also be used to select an operating mode (otherwise known as a thermal management mode) for the vehicle combination **100**. The operating modes may include an "Eco" mode or "Range" mode, in which acceleration and top speed of the vehicle combination **100** can be limited to optimise energy efficiency and maximise range, an "Endurance" mode, intended to enable a vehicle combination **100** to operate for a long duration, a "Performance" mode, configured to provide maximum acceleration and top speed, and an "I-know" mode, in which pre-set configurations for the vehicle combination **100** can be adjusted appropriate to desired performance.

The tactical layer **202** can interface with vehicle motion management components of the control system **202,** in particular the target generator **204**. As discussed above, the tactical layer **202** may provide an input $r_{ads}$ relating to a manoeuvre to the target generator **204**. In some instances, the input $r_{ads}$ may be determined by the vehicle model **203** based on the current parameters $y_1$ received from the vehicle combination **100**. This interface ensures that motion in a reference coordinate system can be requested by the tactical layer **202** within the capabilities of the vehicle combination **100** to ensure safe and efficient motion control. This enables fully automated driving with redundancy and vehicle safety.

The purpose of the target generator **204** is to determine a requested reference input $r_{req}$ and a requested combination control input $v_{comb,req}$ for the vehicle combination **100**. The requested reference input $r_{req}$ is determined based on an input related to a manoeuvre for the vehicle combination **100,** for example the input $r_{ads}$ from the vehicle model **203** of the tactical layer **202,** and represents a requested movement of the vehicle combination **100**. The requested combination control input $v_{comb,req}$ can be determined based on the requested reference input $rreq$ and/or the input $r_{ads}$. The requested combination control input $v_{comb,req}$ can also be determined based on a motion capability $v_{comb,cap}$ for the vehicle combination **100**. The target generator **204** comprises a path planner/controller **214** and a force generator **216**.

In particular, the target generator **204** may receive an input related to a manoeuvre for the vehicle combination **100**. The manoeuvre may be, for example, to travel a curve of a given turning radius, straight-line driving, braking and the like. The target generator **204** may receive data from, for example, a steering wheel and/or gas/brake pedal of the combination **100,** indicating that the driver (or some other system of the vehicle combination **100**) wants to change the direction and/or the speed of the vehicle combination **100** in a certain way. This may be the case in a semiautonomous driving scenario. In some examples, the input may originate from elsewhere, for example any other system that may provide some indication of how the overall forces of the vehicle combination **100** are to be influenced (e.g. steered, propelled or braked). For example, the data may originate from a lane assist system, a lane following system, an emergency steering system, an emergency braking system, an automated or semi-automated drive system.

In one particular example, the target generator **204** may receive the input $r_{ads}$ from the vehicle model **203** of the tactical layer **202**. This may be the case in a fully autonomous driving scenario. Based on this input, the target generator **204** may output a requested reference input $r_{req}$. In particular, the path planner/controller **214** determines the requested reference input $r_{req}$. The requested reference input $r_{req}$ may comprise at least one of a longitudinal acceleration $a_x$ of the vehicle combination **100** as a whole or of a unit **110** of the vehicle combination **100** (for example the unit **110** comprising the combination control allocator **210**), a longitudinal velocity $v_{x1}$ of a tractor unit **110-1**, a lateral velocity $v_{y1}$ of the tractor unit **110-1,** a yaw rate $\omega_{zi}$ of at least one unit **110** of the vehicle combination **100**, and a steering angle $\delta_{f,req}$ of the tractor unit **110-1**. In some examples, the target generator **204** may also receive determined future performance limits for the vehicle combination **100**.

The requested combination control input $v_{comb,req}$ is determined by the force generator **216**. The requested combination control input $v_{comb,req}$ can be determined based on the requested reference input $r_{req}$, or based on the input $r_{ads}$ directly. In the latter case, the path planner/controller **214** can be used to determine a requested reference input $r_{req}$ for shorter term motion, for example by up-sampling the requests $r_{ads}$ from the tactical layer **202** that may be sent infrequently (e.g. every second or so). The requested combination control input $v_{comb,req}$ may include requested motion parameters for the vehicle combination **100**. In particular, the forces $F_{tot,req}$ and/or moments $M_{z,tot,req}$ that need to be applied to the vehicle combination **100** as a whole in order to follow the requested reference input $r_{req}$ are determined. The requested motion parameters included in the requested combination control input $v_{comb,req}$ of the vehicle combination **100** may comprise at least one of a requested longitudinal force $F_{x,tot,req}$ of the vehicle combination **100,** a requested lateral force $F_{y,tot,req}$ of the vehicle combination **100,** a requested longitudinal coupling force $F_{cxi,req}$ between consecutive units **110,** and a requested lateral coupling force $F_{cyi,req}$ between consecutive units **110**. These make up the total requested force to be applied $F_{tot,req}$ for the vehicle combination **100**. The motion parameters included in the requested combination control input $v_{comb,req}$ of the vehicle combination **100** may also comprise a requested yaw moment $M_{z,i,req}$ for one or more units **110**.

The requested combination control input $v_{comb,req}$ may also be determined based on state information $y_2$ from the different units **110** of the vehicle combination **100** and a motion capability $v_{comb,cap}$ for the vehicle combination **100**. The state information $y_2$ may include information from sensors of the vehicle combination **100** such as wheel speed sensors, inertial measurement units, articulation angle sensors and the like. The motion capability $v_{comb,cap}$ of the vehicle combination **100** may describe the limits of motion parameters for safe operation of the vehicle combination **100**. The motion capability $v_{comb,cap}$ may comprise at least one of a longitudinal force capability $F_{x,tot,cap}$ of the vehicle combination **100,** a lateral force capability $F_{y,tot,cap}$ of the vehicle combination **100,** and a yaw moment capability $M_{z,i,cap}$ for one or more units **110**. The state information $y_2$ may also include structural parameters of the vehicle combination **100** as discussed above in relation to parameters $y_1$.

The requested combination control input $v_{comb,req}$ may be determined based on a vehicle model. The vehicle model can be any suitable model, for example a model known in the art. The model can be based on real tests, computer model simulations, a machine-learning model, or other suitable means known in the art. The vehicle model may provide motion prediction of the vehicle combination **100** by looking at previous steering input and acceleration input. The prediction may include instabilities such as understeer or rollover risk, for example within a one-second horizon. The model may be, for example, a single-track model, i.e., left and right wheels on a given axle are considered together. The real units can have axle groups with several axles, but in the model they are considered together. A tyre model can be used in combination with the vehicle model. The tyre model may take into account the cornering stiffness of the tyres of the vehicle combination **100.**

The state estimator **206** is responsible for processing state information $y_4$ from the different units **110** of the vehicle combination **100.** For example, the state estimator **206** may receive information from sensors of the vehicle combination **100** such as wheel speed sensors, inertial measurement units, articulation angle sensors and the like and use this information to determine states for the vehicle combination **100** and the various units. The state estimator **206** may then output unit-specific state information $x_p$ to the energy manager **208** and unit-specific state information $x_c$ to the combination control allocator **210.**

The energy manager **208** determines a power split between the different units **110** of the vehicle combination **100.** The energy manager **208** may also determine a power split within each unit **110,** meaning how the power demand is divided between the actuators (for example, the ICE, the electrical machines **120,** service brakes **150,** and/or steering actuators) of the unit **110.** Inputs to the energy manager **208** include the requested reference input $r_{req}$ from the target generator **204** and the statuses $SoX$ of the batteries **130** of the vehicle combination **100.** The energy manager **208** determines a power allocation and an associated power allocation input $u_{comb,des}$. The power split may be determined based on the state of energy rate ($S\dot{o}E$) for each unit **110** and/or the longitudinal part of the requested force for the unit's propulsion system $F_{xpi,req}$. The energy manager **208** may consider factors that affect long-term energy consumption, such as road slopes, SoC states, charger locations, and the like, and determine power behaviour as a function of the energy over time. The energy manager **208** may also be configured as a power manger. For example when a time horizon is considered, it may handle energy. When instantaneous values are considered, it may handle power.

Based on these values, the control allocators **210, 212** may determine control data that meets the requested global forces of the vehicle combination **100** to meet certain constraints, such as power management (optimising battery usage) and safety constraints (ensuring that the trajectory for the whole combination **100** is obstacle free and collision free). In particular, the control allocators **210, 212** determine how various actuators (for example, the ICE, the electrical machines **120,** service brakes **150,** and/or steering actuators) of the vehicle combination **100** are to be controlled in order to generate requested global forces of the vehicle combination **100** as a whole. The combination control allocator **210** and the various unit specific control allocators **212** together form a distributed control allocation system for the vehicle combination **100.** In this system, the control allocation is performed on multiple levels, i.e. first on a level of the vehicle combination **100** as a whole, and then on a level of each vehicle unit **110** individually.

The combination control allocator **210** transforms the requested combination control input $v_{comb,req}$ from the target generator **204** into an allocated combination control input $u_{comb}$ for the vehicle combination **100,** describing appropriate motion parameters for each unit **110.** The allocated combination control input $u_{comb}$ of the vehicle combination **100** comprises the forces $F$ and/or moments $M$ to be applied for the vehicle combination **100.** The allocated combination control input $u_{comb}$ comprises allocated unit control inputs $u_i$ describing the forces and/or moments that each respective unit **110** is to produce in order to provide the allocated combination control input $u_{comb}$ of the vehicle combination **100.** The allocated unit control inputs $u_i$ may comprise a force control input for the unit's propulsion system $F_{pi}$, and a force control input for the unit's braking system $F_{bi}$.

The unit control allocators **212** comprise a specific control allocator **212** for each unit **110** of the vehicle combination **100.** The unit-specific allocated control inputs $u_i$ that are output from the combination control allocator **210** are transformed into actuator-specific allocated control inputs $u_k$, describing actual actuator commands by the unit-specific control allocators **212.** For example, the unit-specific control allocators **212** map the forces and moments of each unit **110** into the steering and drive/brake torques to be applied at the wheels of each unit **110.** To do this, the unit control allocators **212** may determine a requested force control input for the unit's propulsion system $F_{pi}$ and a requested force control input for the unit's braking system $F_{bi}$. The unit control allocators **212** then determine the actuator-specific allocated control inputs $u_k$ accordingly, which comprise allocated force control inputs for the individual actuators of the unit's different systems.

In some examples, each unit **110** may be capable of estimating its own capabilities $u_{i,cap}$, e.g. how much and/or how fast the unit **110** can move at a current time instant. Each unit **110** may also be capable of estimating its own power losses $P_{i,loss}$. The unit power losses $P_{i,loss}$ comprise a power loss for its propulsion system $P_{pi,loss}$ and a power loss for its braking system $P_{bi,loss}$. This may be based on an actuator power losses $P_{k,loss,i}$ for each actuator in the unit **110** as well as other power losses in the unit **110,** such as power losses in the batteries and the drivetrain. The actuator power losses $P_{k,loss,i}$ comprise a power loss for propulsion actuators $P_{pk,loss,i}$ (e.g. electrical machines **120,** ICE, and/or other propulsion sources) and a power loss for braking actuators $P_{bk,loss,i}$ (e.g. electrical machines **120** and/or service brakes **150**). The actuators of each unit **110** may provide the actuator power losses $P_{k,loss,i}$ to the respective unit control allocator **212-i,** which provides unit power losses $P_{i,loss}$ to the combination control allocator **210.**

There are various other types of power losses that the drivetrain of a vehicle combination must overcome to propel the vehicle forward, such as rolling resistance losses, aerodynamic losses and slip losses. Rolling resistance losses occur when energy is dissipated as a tyre rolls across a road surface and deforms at the contact area with the road surface. The energy expenditure this requires creates a force that opposes the vehicle's motion, referred to as rolling resistance. Aerodynamic losses occur as the vehicle moves through air, whereby an aerodynamic drag force acts in the opposite direction to the vehicle's direction of motion. Slip losses occur when a tyre loses full traction with the road surface.

Slip losses can further be categorised into lateral and longitudinal slip losses. Losses due to longitudinal slip can be estimated by longitudinal and vertical forces on driven wheels or axles. For a vehicle combination, longitudinal slip losses primarily affect the driven axles of the tractor, as they are responsible for transferring torque from the engine to the road surface. Lateral slip losses refer to the energy and efficiency losses that occur due to the lateral forces acting on the tyres and axles of the vehicle during low-speed manoeuvres, for example during a turn.

Lateral slip losses are primarily due to tyre scrubbing, which refers to the lateral movement or sliding of a vehicle's tyres across the road surface when they move in a direction that is not aligned with their natural rolling path. This typically occurs during sharp turns or when there is misalignment between axles or tyres. As a vehicle is manoeuvred to make a turn, the lateral forces acting on the tyres increase, which causes the tyres to slip or scrub against the road surface, leading to increased friction and greater tyre wear. This is particularly common in situations where the wheels are not able to follow the natural arc of a turn, such as in vehicle combinations where the axles have fixed, non-steered wheels. In order to improve manoeuvrability and energy efficiency of a vehicle combination during low speed manoeuvring, it is of particular importance to be able to predict or estimate lateral slip losses of a vehicle combination **100.**

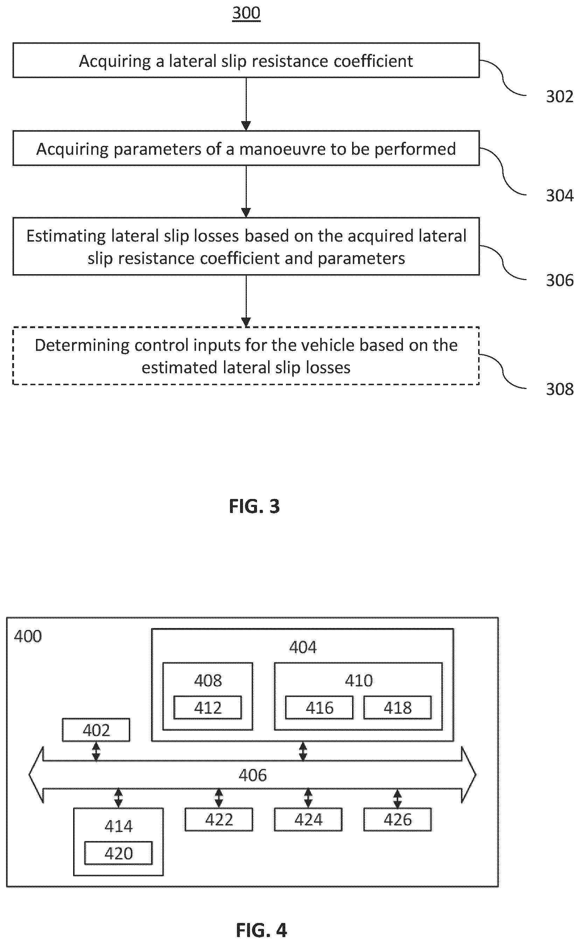

FIG. 3 is a flow chart of a computer-implemented method **300** according to an example. The method **300** is for estimating lateral slip losses in a vehicle performing a manoeuvre, such as the vehicle combination **100.** The method **300** enables lateral slip losses for the vehicle to be estimated based on an LSRC and parameters of the manoeuvre to be performed, for use in determining control inputs for the vehicle combination by an autonomous driving system. The method **300** may be implemented by processing circuitry of a computer system (e.g., the control system **200** described in relation to **FIG. 2).**

At **302,** an LSRC for the vehicle is acquired. The LSRC is a function that represents lateral slip losses, as discussed above, depending on a plurality of parameters. The LSRC can be used to calculate lateral slip losses for a specific vehicle performing a specific manoeuvre, and provides a reliable approximation of lateral slip losses during a turning manoeuvre.

In particular, the LSRC is a function of the lateral force on the vehicle. The lateral force can be modelled for a particular manoeuvre, for example, by offline or online simulations of a manoeuvre using a vehicle model. In some examples, the processing circuitry is configured to normalise the modelled lateral force by vehicle speed and vertical force on axles of the vehicle. The LSRC is independent of the longitudinal speed of the vehicle. Therefore, it is beneficial to create a metric of lateral slip losses wherein the impact of vehicle speed and vertical force on axles of the vehicle is removed.

The LSRC may be acquired in different ways. In some examples, the LSRC may be defined as:

$$\mathrm{LSRC}_i \approx \frac{\sum \frac{F_{yw_j} \cdot v_{yw_j}}{F_{zw_j}}}{v_{xi}} \qquad (1)$$

where $F_{ywj}$ is the lateral force on the wheels of the $j$th axle, $v_{ywj}$ is the lateral velocity on the wheels of the $j$th axle, $F_z$ is the vertical force acting on the wheels of the $j$th axle and $v_{xi}$ is the longitudinal velocity of the vehicle. The LSRC is acquired for the ith vehicle unit. The values of $F_{ywj}$, $v_{ywj}$, $F_z$ and $v_{xi}$ used to define the LSRC may be predicted values, pre-determined by offline or online simulations of a manoeuvre using a vehicle model.

In some examples, the LSRC is acquired by modelling the lateral force as a function of the turning radius of a manoeuvre. In particular, the turning radius affects the lateral forces $F_{ywj}$ used in the above definition of the LSRC, wherein a larger radius will induce less lateral force acting on the wheels of the vehicle compared to a smaller turning radius, given the same velocity. Consequently, lateral slip loss will also decrease as the turning radius of a manoeuvre increases. As such, simulations may be performed using different turning radii to estimate the lateral forces on the wheels, in order to calculate corresponding LSRC values using the definition above. An LSRC may then be acquired dependent on the turning radius of a specific manoeuvre to be performed and lateral force and velocity of the vehicle to perform the manoeuvre, such that the acquired coefficient reflects the conditions of a particular manoeuvre.

In some examples, the LSRC is acquired as a function of one or more other turn parameters. The turn parameters may include turn length and/or angle, and affect how much lateral force $F_{ywj}$ is induced on the wheels, wherein the lateral force $F_{ywj}$ is used to define the LSRC as discussed above. LSRC and turn parameters are related in such a way that the LSRC increases with turn angle, for a given turn radius. For example, the power loss of a 270 degree turn is larger than the power loss of a 90 degree turn. The LSRC further decreases with increasing turn length, as a longer turn length for a given turn angle will result in a larger turning radius.

In some examples, the LSRC is acquired as a function of the friction coefficient $\mu$ between the wheels and the surface being travelled on. The friction coefficient $\mu$ affects how much lateral force $F_{ywj}$ is induced on the wheels, wherein the lateral force is used to define the LSRC as discussed above. LSRC and friction coefficient $\mu$ are related in such a way that the LSRC is reduced as the friction coefficient $\mu$ decreases. Consequently, on a road with high friction, for example dry asphalt, the LSRC will be higher than on a road with low friction, such as a snowy surface. By acquiring the LSRC as a function of the friction coefficient $\mu$, calculations of slip losses and subsequent determination of control input may be adapted based on current road conditions.

In some examples, the LSRC is approximated as an equation, for example as follows:

$$LSRC(r,\mu) = \mu * \begin{cases} 0.0185 - 0.008 * r, \ 10 \leq r \leq 20 \\ 0.0476 - 0.001 * r, 20 < r \leq 40 \\ 0.0134 - 0.00018 * r, 40 < r \leq 60 \end{cases} \tag{2}$$

where $r$ is the turning radius and $\mu$ is the friction coefficient. This equation could be exponential, polynomial or linear, as shown above. The LSRC is acquired by solving the equation. In this way, it can be calculated in real-time, which enables accurate and reliable values for the LSRC to be acquired even during changing conditions. The equation may be used to determine values of an LSRC lookup table, for example by approximating LSRC values depending on different turn radii and friction coefficients.

For vehicle combinations such as the vehicle combination **100,** a respective LSRC may be acquired for each unit **110** of the vehicle combination **100.** As the LSRC is determined by the lateral forces acting on the wheels of a unit **110** and the lateral velocity on the wheels of a unit **110,** it will be different for every vehicle unit **110** and depend on the configuration of a specific vehicle combination **100** and how the vehicle units **110** interact when the vehicle combination **100** is manoeuvred. By acquiring a respective LSRC for each vehicle unit **110,** the estimation of lateral slip losses for a vehicle combination **100** will therefore be more accurate. In general, the lateral power loss in a vehicle combination **100** will increase by the number of units **110** in the vehicle combination **100.**

In some examples, the LSRC is acquired (e.g. retrieved or received) from a lookup table. The look up table may be a part of (stored in a memory of) the VMC of the vehicle combination **100.** The lookup table stores pre-calculated values for the LSRC dependent on parameters such as vehicle speed, vertical force on axles of the vehicle, friction coefficient, and turning parameters. The lookup table may be obtained by performing simulations for manoeuvres of various turn parameters and different road conditions and vehicle configurations. Acquiring the LSRC from a lookup table in the VMC helps in reducing computations done by the tactical layer **202.**

At **304,** parameters of the manoeuvre to be performed by the vehicle are acquired, including a vehicle speed, a vertical force on one or more axles of the vehicle, and a turning radius. As discussed above, vehicle speed, vertical force on the vehicle axles, and turning radius are parameters which will affect the LSRC. Therefore, by acquiring parameters of a specific manoeuvre to be performed by a specific vehicle, an accurate LSRC may be acquired, either using a lookup table or by solving an equation, as discussed above, such that slip losses for the specific vehicle performing the specific manoeuvre may be estimated.

At **306,** lateral slip losses for the vehicle are estimated based on the acquired LSRC and the acquired parameters of the manoeuvre. The estimation may be performed using the following equation:

$$P_{\text{slip},y}\left(F_{zi,}\ v_{xi},r\right) = LSRC_i(r, v_{xi}, \mu) * F_{zi} * v_{xi} \tag{3}$$

where $P_{\text{slip},y}$ represents power losses due to lateral slip, $F_{zi}$ represents the vertical force on one or more axles of the vehicle (unit), $v_{xi}$ represents vehicle (unit) speed, and $r$ represents turning radius. $LSRC_i$ represents the LSRC discussed above as a function of the turning radius, longitudinal vehicle (unit) speed and the friction coefficient $\mu$ for a unit $i$. This equation is particularly suitable for estimating power losses for speeds under 5m/s. The lateral slip losses based on the LSRC are determined for each vehicle unit respectively. In some examples, total lateral slip losses for the vehicle combination are estimated by adding the lateral slip losses for each vehicle unit.

According to some examples, a first control system is configured to acquire the LSRC and a second control system is configured to receive the LSRC and to estimate the lateral slip losses. The first control system may be the VMC **204, 206, 208,** and the second control system may be the ADS (tactical layer **202),** as discussed above in relation to **FIG. 2.** The VMC acquires the LSRC, for example by calculating a value or using a lookup table, as discussed above, and communicates it along with the parameters of the manoeuvre to be performed to the ADS. The ADS will then use the received parameters and coefficient to estimate the lateral slip losses. Determining the LSRC by VMC, such that the ADS receives a pre-calculated function or value, will reduce the amount of computation needed to be performed by the ADS, and thus enable faster and more efficient operation of the ADS.

In one example, at **308,** control inputs are determined based on the estimated lateral slip losses and an objective, which may be to reduce the lateral slip losses and/or reduce swept path width. This may be performed using an optimisation scheme known in the art, taking into account the estimated lateral slip losses. The control inputs may be determined by the automated driving system, for example as the input $r_{ads}$ as discussed in relation to **FIG. 2.** In this way, control input is determined which enables the vehicle to be controlled to perform a manoeuvre in a manner which prioritises energy efficiency and/or manoeuvrability. The ADS may further determines the control inputs $r_{ads}$ based on vehicle status and capabilities, such as actuator capabilities including range of steering angles and available propulsive power, for example using vehicle model **203** discussed in relation to **FIG. 2.**

The control input $r_{ads}$ may then be provided to a control system configured to determine one or more control inputs for the vehicle combination **100.** The control system may be the vehicle motion controller (VMC) of the vehicle combination **100** shown in relation to **FIG. 2.** The $r_{ads}$ may be provided as input to the target generator **204** of the VMC, which generates inputs $r_{req}$, as discussed above. Based on $r_{req}$ or $r_{ads}$ directly, a control input for the vehicle combination, $v_{comb,req}$ may then be determined by the force generator **216,** such that the vehicle combination **100** can be controlled in an appropriate manner to implement the manoeuvre to be performed in a manner which prioritises energy efficiency and/or manoeuvrability.

The method **300** enables lateral power losses for vehicle combinations to be estimated based on an LSRC and parameters of the manoeuvre to be performed. In this way, control inputs for the vehicle may be determined based on the estimated losses and an objective, such that power losses are reduced and manoeuvrability of the vehicle is improved. The LSRC provides a reliable approximation of power losses due to the lateral slip during a turning manoeuvre, while it reduces the computational demands on the ADS. In this way, the method enables power losses to be reduced and manoeuvrability of the vehicle combination to be improved, while efficient communication between VMC and ADS is ensured.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilised with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine executable instructions or data structures and which can be accessed by a computer or other machine with processing circuitry **402**. A basic input/output system (BIOS) **412** may be stored in the non-volatile memory **408** and can include the basic routines that help to transfer information between elements within the computer system **400**.

The computer system **400** may further include or be coupled to a non-transitory computer-readable storage medium such as the storage device **414**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410**, which may include an operating system **416** and/or one or more program modules **418**. All or a portion of the examples disclosed herein may be implemented as a computer program **420** stored on a transitory or non-transitory computer-usable or computer-readable storage medium (e.g., single medium or multiple media), such as the storage device **414**, which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402**. In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402**. The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

**Example 1:** A computer system (200, 400) for estimating lateral slip losses, $P_{slip,y}$, in a vehicle (100) performing a manoeuvre, the computer system (200, 400) comprising processing circuitry (402) configured to: acquire a lateral slip resistance coefficient, *LSRC,* for the vehicle (100); acquire parameters of the manoeuvre to be performed by the vehicle (100), including a vehicle speed, $v_x$, a vertical force, $F_z$, on one or more axles of the vehicle, and a turning radius, *R,*; and estimate lateral slip losses, $P_{slip,y}$, for the vehicle (100) based on the acquired lateral slip resistance coefficient, *LSRC,* and the acquired parameters of the manoeuvre.

**Example 2:** The computer system (200, 400) of example 1, wherein the processing circuitry (402) is configured to acquire the lateral slip resistance coefficient, *LSRC,* by modelling a lateral force of the vehicle as a function of turning radius of the manoeuvre.

**Example 3:** The computer system (200, 400) of example 2, wherein the processing circuitry (402) is configured to acquire the lateral slip resistance coefficient, *LSRC,* by normalising the modelled lateral force by longitudinal vehicle velocity and vertical force on axles of the vehicle (100).

**Example 4:** The computer system (200, 400) of any preceding example, wherein the processing circuitry (402) is configured to acquire the lateral slip resistance coefficient, *LSRC,* as a function of one or more turn parameters.

**Example 5:** The computer system (200, 400) of any preceding example, wherein the processing circuitry (402) is configured to acquire the lateral slip resistance coefficient, *LSRC,* as a function of a friction coefficient, $\mu$.

**Example 6:** The computer system (200, 400) of any preceding example, wherein the processing circuitry (402) is configured to approximate the lateral slip resistance coefficient, *LSRC,* as an equation and acquire the lateral slip resistance coefficient, *LSRC,* by solving the equation.

**Example 7:** The computer system (200, 400) of any preceding example, wherein the processing circuitry (402) is configured to acquire the lateral slip resistance coefficient, *LSRC,* from a lookup table.

**Example 8:** The computer system (200, 400) of any preceding example, wherein the vehicle (100) is a vehicle combination comprising a tractor unit and at least one trailing unit, wherein the processing circuitry (402) is configured to acquire a respective lateral slip resistance coefficient, *LSRC,* for each unit of the vehicle combination (100).

**Example 9:** The computer system (200, 400) of any preceding example, comprising a control system (204, 206, 208) configured to determine the lateral slip resistance coefficient, *LSRC,* and an automated driving system (202) configured to receive the lateral slip resistance coefficient, *LSRC,* and to estimate the lateral slip losses, $P_{\text{slip},y}$.

**Example 10:** The computer system (200, 400) of example 9, wherein the automated driving system (202) is configured to determine control inputs for the vehicle based on the estimated lateral slip losses, $P_{\text{slip},y}$, and an objective.

**Example 11:** The computer system (200, 400) of example 10, wherein the objective comprises reducing the lateral slip losses and/or reducing swept path width.

**Example 12:** A vehicle (100) comprising the computer system (200, 400) of any preceding example.

**Example 13:** A computer-implemented method (300) for estimating lateral slip losses, $P_{\text{slip},y}$, in a vehicle (100) performing a manoeuvre, the method (300) comprising: acquiring (302), by processing circuitry (402) of a computer system (200, 400), a lateral slip resistance coefficient, *LSRC,* for the vehicle (100); acquiring (304), by the processing circuitry (402), parameters of the manoeuvre to be performed by the vehicle (100), including a vehicle speed, $v_x$, a vertical force, $F_z$, on one or more axles of the vehicle, and a turning radius, $R$; and estimating (306), by the processing circuitry (402), lateral slip losses, $P_{\text{slip},y}$, for the vehicle (100) based on the acquired lateral slip resistance coefficient, *LSRC,* and the acquired parameters of the manoeuvre.

**Example 14:** The computer-implemented method (300) of example 13, comprising acquiring the lateral slip resistance coefficient, *LSRC,* by the processing circuitry (402), by modelling a lateral force of the vehicle (100) as a function of turning radius of the manoeuvre.

**Example 15:** The computer-implemented method (300) of example 14, comprising acquiring the lateral slip resistance coefficient, *LSRC,* by the processing circuitry (402), by normalising the modelled lateral force by longitudinal vehicle velocity and vertical force on axles of the vehicle (100).

**Example 16:** The computer-implemented method (300) of example 13 to 15, comprising acquiring the lateral slip resistance coefficient, *LSRC,* by the processing circuitry (402), as a function of one or more turn parameters.

**Example 17:** The computer-implemented method (300) of example 13 to 16, comprising acquiring the lateral slip resistance coefficient, *LSRC,* by the processing circuitry (402), as a function of a friction coefficient, $\mu$.

**Example 18:** The computer-implemented method (300) of example 13 to 17, comprising approximating the lateral slip resistance coefficient, *LSRC,* by the processing circuitry (402), as an equation, and acquiring the lateral slip resistance coefficient, *LSRC,* by the processing circuitry (402), by solving the equation.

**Example 19:** The computer-implemented method (300) of example 13 to 18, comprising acquiring the lateral slip resistance coefficient, *LSRC,* by the processing circuitry (402), from a lookup table.

**Example 20:** The computer-implemented method (300) of example 13 to 19, wherein the vehicle (100) is a vehicle combination comprising a tractor unit and at least one trailing unit, and wherein a respective lateral slip resistance coefficient, *LSRC,* is acquired, by the processing circuitry (402), for each unit of the vehicle combination (100).

**Example 21:** The computer-implemented method (300) of example 13 to 20, wherein the lateral slip resistance coefficient, *LSRC,* is determined by a control system (204, 206, 208) and received by an automated driving system (202), and wherein the lateral slip losses, $P_{\text{slip},y}$, are estimated by automated driving system (202).

**Example 22:** The computer-implemented method (300) of example 21, further comprising determining (308), by the automated driving system (202), control inputs for the vehicle based on the estimated lateral slip losses, $P_{\text{slip},y}$, and an objective.

**Example 23:** The computer-implemented method (300) of example 22, wherein the objective comprises reducing the lateral slip losses and/or reducing swept path width.

**Example 24:** A computer program product comprising program code for performing, when executed by processing circuitry (402), the computer-implemented method (300) of any of examples 13 to 23.

**Example 25:** A non-transitory computer-readable storage medium comprising instructions, which, when executed by processing circuitry (402), cause the processing circuitry to perform the computer-implemented method (300) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognise that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (200, 400) for estimating lateral slip losses, $P_{\text{slip},y}$, in a vehicle (100) performing a manoeuvre, the computer system (200, 400) comprising processing circuitry (402) configured to:

   acquire a lateral slip resistance coefficient, *LSRC,* for the vehicle (100);
   acquire parameters of the manoeuvre to be performed by the vehicle (100), including a vehicle speed, $v_x$, a vertical force, $F_z$, on one or more axles of the vehicle, and a turning radius, *R*; and
   estimate lateral slip losses, $P_{\text{slip},y}$, for the vehicle (100) based on the acquired lateral slip resistance coefficient and the acquired parameters of the manoeuvre.

2. The computer system (200, 400) of claim 1, wherein the processing circuitry (402) is configured to acquire the lateral slip resistance coefficient, *LSRC,* by modelling a lateral force of the vehicle (100) as a function of the turning radius of the manoeuvre.

3. The computer system (200, 400) of claim 2, wherein the processing circuitry (402) is configured to acquire the lateral slip resistance coefficient, *LSRC,* by normalising the modelled lateral force by longitudinal vehicle velocity and vertical force on axles of the vehicle (100).

4. The computer system (200, 400) of any preceding claim, wherein the processing circuitry (402) is configured to acquire the lateral slip resistance coefficient, *LSRC,* as a function of one or more turn parameters.

5. The computer system (200, 400) of any preceding claim, wherein the processing circuitry (402) is configured to acquire the lateral slip resistance coefficient, *LSRC,* as a function of a friction coefficient, $\mu$.

6. The computer system (200, 400) of any preceding claim, wherein the processing circuitry (402) is configured to approximate the lateral slip resistance coefficient, *LSRC,* as an equation and acquire the lateral slip resistance coefficient, *LSRC,* by solving the equation.

7. The computer system (200, 400) of any preceding claim, wherein the processing circuitry (402) is configured to acquire the lateral slip resistance coefficient, *LSRC,* from a lookup table.

8. The computer system (200, 400) of any preceding claim, wherein the vehicle (100) is a vehicle combination comprising a tractor unit and at least one trailing unit, wherein the processing circuitry (402) is configured to acquire a respective lateral slip resistance coefficient, *LSRC,* for each unit of the vehicle combination (100).

9. The computer system (200, 400) of any preceding claim, comprising a control system (204, 206, 208) configured to determine the lateral slip resistance coefficient, *LSRC,* and an automated driving system (202) configured to receive the lateral slip resistance coefficient, *LSRC,* and to estimate the lateral slip losses, $P_{slip,y}$.

10. The computer system (200, 400) of claim 9, wherein the automated driving system (202) is configured to determine control inputs for the vehicle based on the estimated lateral slip losses, $P_{slip,y}$, and an objective.

11. The computer system (200, 400) of claim 10, wherein the objective comprises one of more of reducing the lateral slip losses and reducing swept path width.

12. A vehicle (100) comprising the computer system (200, 400) of any preceding claim.

13. A computer-implemented method (300) for estimating lateral slip losses, $P_{slip,y}$, in a vehicle (100) performing a manoeuvre, the method (300) comprising:

   acquiring (302), by processing circuitry (402) of a computer system (200, 400), a lateral slip resistance coefficient, *LSRC,* for the vehicle (100);
   acquiring (304), by the processing circuitry (402), parameters of the manoeuvre to be performed by the vehicle (100), including a vehicle speed, $v_x$, a vertical force, $F_z$, on one or more axles of the vehicle, and a turning radius, R; and
   estimating (306), by the processing circuitry (402), lateral slip losses, $P_{slip,y}$, for the vehicle (100) based on the acquired lateral slip resistance coefficient, *LSRC,* and the acquired parameters of the manoeuvre.

14. A computer program product comprising program code for performing, when executed by the processing circuitry (402), the computer-implemented method (300) of claim 13.

15. A non-transitory computer-readable storage medium comprising instructions, which when executed by the processing circuitry (402), cause the processing circuitry (402) to perform the computer-implemented method (300) of claim 13.

FIG. 1A

FIG. 1A

FIG. 1B

$F_{y,tot}$

$F_{x,tot}$

110-n

$M_{z,n}$

212-n

110-i

$M_{z,i}$

212-i

110-1

$M_{z,1}$

212-1

160b

210

160b

100

**FIG. 2**

300

| Acquiring a lateral slip resistance coefficient |
|---|

302

| Acquiring parameters of a manoeuvre to be performed |
|---|

304

| Estimating lateral slip losses based on the acquired lateral slip resistance coefficient and parameters |
|---|

306

| Determining control inputs for the vehicle based on the estimated lateral slip losses |
|---|

308

**FIG. 3**

**FIG. 4**

| | Europäisches Patentamt European Patent Office Office européen des brevets | **EUROPEAN SEARCH REPORT** | **Application Number** EP 25 19 6701 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Torinsson Juliette ET AL: "Upper bounds of lateral tire slip loss minimization during daily driving using torque vectoring", , 31 December 2022 (2022-12-31), XP093353473, Retrieved from the Internet: URL:https://research.chalmers.se/en/public ation/537730 [retrieved on 2026-01-14] * page 1 - page 3 * ----- | 1-15 | INV. B60W40/064 B60W40/068 B60W30/045 B60W40/12 |
| A | US 2023/236028 A1 (YANG DERONG [SE] ET AL) 27 July 2023 (2023-07-27) * paragraph [0070] - paragraph [0116] * ----- | 1-15 | |
| A | CN 116 552 564 A (SUZHOU CHANGXING ZHIJIA AUTOMOBILE TECH CO LTD) 8 August 2023 (2023-08-08) * paragraph [0050] - paragraph [0054] * ----- | 1-15 | **TECHNICAL FIELDS SEARCHED (IPC)** B60W |

The present search report has been drawn up for all claims

| Place of search | Date of completion of the search | Examiner |
|---|---|---|
| Munich | 15 January 2026 | Stolle, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 6701

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | Publication date | Patent family member(s) | Publication date |
|---|---|---|---|
| US 2023236028 A1 | 27-07-2023 | CN 116494970 A<br>EP 4220329 A1<br>US 2023236028 A1 | 28-07-2023<br>02-08-2023<br>27-07-2023 |
| CN 116552564 A | 08-08-2023 | NONE | |

EPO FORM P0459

For more details about this annex : see Official Journal of the European Patent Office, No. 12/82